# EUROPEAN PATENT SPECIFICATION

(11) **EP 0 439 283 B1**
(45) Date of publication and mention of the grant of the patent: **28.02.1996**
(21) Application number: 91300372.9
(22) Date of filing: 17.01.1991
(51) Int. Cl.: C08J 9/14, C08L 61/04

(54) **Process for producing phenolic resins using blowing agents**
Verfahren zur Herstellung von Schaumstoffen aus Phenolharzen unter Verwendung von Treibmitteln
Procédé de préparation de mousses de résines phénoliques utilisant des agents gonflants

(30) Priority: 20.01.1990 GB 9001368
(43) Date of publication of application: 31.07.1991
(73) Proprietor: BP Chemicals Limited, London EC2M 7BA (GB)
(72) Inventor: Barcroft, Michael Andrew, Sully, South Glamorgan, Wales CF6 2YU (GB); Johnstone, David Roger, Sully, South Glamorgan, Wales CF6 2YU (GB); Gould, Kathryn Sims, Wilstead, Bedfordshire MK45 3EA (GB); Wilson, David Charles, Sully, South Glamorgan, Wales CF6 2YU (GB)
(74) Representative: Krishnan, Suryanarayana Kalyana

(56) References cited:
- WO-A-88/08013
- FR-A- 2 081 919
- FR-A- 2 194 022
- GB-A- 1 551 370
- GB-A- 2 143 237
- JP-A- 1 060 694
- RESEARCH DISCLOSURE. vol. 16239, no. 102, 01 October 1977, HAVANT GB pages 70 - 70; DU PONT DE NEMOURS: "FLUOROCARBON AZEOTROPES"
- WPIL (DERWENT), abstract nr. 89-11233, 07 March 1989 ; & JP-A-1060694

## Description

The present invention relates to an improved process for making phenolic foams from phenolic resins using a specific combination of blowing agents.

Hitherto chlorofluorocarbons (hereafter "CFC's") have been widely used as blowing agents for producing foams from synthetic resins. Whilst the CFC's perform very efficiently as blowing agents, it has been increasingly causing concern that these agents may have a damaging effect on the environment, especially the depletion of the ozone layer. Thus there have been great efforts made to identify a substitute for CFC's which will be more user friendly. Such efforts have met with some success using CFC's in which one or more of the chlorine atoms has been replaced by hydrogen atoms (hereafter "HCFC's"). Whilst the HCFC's are far more environmentally than the CFC's, they nevertheless do not lead to foam of as good physical properties. Most especially, the thermal insulation performance is impaired and physical strength reduced.

Prior published JP-A-1-60 694 discloses an azeotropic solvent composition for steam cleaning and has nothing to do with any blowing agent. Similarly prior published WO-A-88-8 013 discloses a process for producing foams from an alkenyl aromatic synthetic resin using several steps the first of which includes inter alia heat plastifying the alkenyl aromatic synthetic resin before introducing the plastified resin and a blowing agent into a mixing device. However, it is abundantly clear from the above and the remainder of the specification that the synthetic resins described are of the polystyrene type (page 8, lines 15-33). It is well established that such resins are thermoplastic and hence can be readily "plastified" by heat. It is equally well established that phenolic resins are neither alkenyl aromatic resins nor are they thermoplastic; in fact, phenolic resins are thermosets.

FR-A-2194022 (equivalent to GB-A-1442858) relates to electrical apparatus comprising closed cell rigid polymeric foam parts. These parts are made from urethane foams in turn prepared from urethane resins using a class of expanding agents which include halocarbons and halocarbon mixtures. There is no mention in this document of thermal insulation characteristics of such foams nor indeed is there any reference to the use of such expanding agents for producing foams from phenolic resins. FR-A-2081919 (equivalent to GB-A-1283113) relates to insulating materials of the phenol-formaldehyde resins type suitable for use in production of the corresponding foams. This document describes the use of halo(hydro)carbons as blowing agents but not perfluoroalkanes. There is no mention of the methods of making closed cell foams or indeed the benefits of using a combination of blowing agents. In phenolic foams, an effective blowing agent must meet the following criteria:
(a) It must be not readily soluble in the resin to be foamed;
(b) It should be easy to emulsify in the resin; and
(c) For a surfactant to be effective it must reside at the interface between blowing agent and resin. For this to happen, the surfactant must have a balanced affinity for the two phases.

These criteria are not met by HCFC's alone because HCFC's, for instance, are more soluble in phenolic resins than CFC's (see Examples below) and the conventional surfactants produce foam of coarse, friable cell structure. Hence the relatively poor performance of HCFC's as blowing agents when compared with CFC's. Similarly perfluoroalkanes when used alone give a poor performance as the blowing agent.

It has now been found that the above performance problems can be mitigated by using a blend of materials which have either no ozone depletion potential or very little since they are either free of chlorine or have short atmospheric lifetimes compared to CFC's.

It is an object of the present invention to devise a process for producing phenolic foams of improved properties, for example, one or more of water absorption, moisture vapour transmission, stable thermal conductivity values, compression strength and closed cell content such that it has a thermal conductivity value (k) below 0.025W/m.K by using a novel blowing agent for making said foams. The thermal conductivity value of a given foam is represented by 'k' and can be measured at 10°C according to BS 4370, Part 2. The thermal conductivity value will hereafter be referred to as the "k value". The lower the k value the lower the thermal conductivity and the more desirable the foam.

Accordingly, the present invention is a process for producing phenolic foams from phenolic resins using a blowing agent, characterised by using as blowing agent a blend comprising:
(A) at least one fluorocarbon (hereafter "PFA") of the general formula:

   CₙHₓF_{y} (I)

   wherein
   x= 0, or a whole number from 2 to n/2 such that
   (a) for a cyclic fluorocarbon
      - when x =: 0, n = 3 to 10 and y = 2n and
      - when x =: a whole number from 2 to n/2,
      - n =: 4 or higher and
      - y =: 2n - x
      whereby x+y = 2n, and
   (b) for an open chain fluorocarbon
      - when x =: 0, n = 2 to 10 and y = 2n+2 and
      - when x =: a whole number from 2 to n/2,
      - n =: 4 or higher and
      - y =: (2n+2) - x
   (B) at least one other component selected from
      (a) a hydrogenated chlorofluorocarbon (hereafter "HCFC"),
      (b) a hydrogenated fluorocarbon (hereafter "HFC") of the general formula:

         CᵣHₚF_{q} (II)

         wherein
         - r =: 1 to 3
         - p =: 1 to 4 and
         - q =: (2r+2)-p for an open-chain HFC
         and (2r-p) for a cyclic HFC, and
      (c) an alkane or cycloalkane having a boiling point below 120°C.

In the blowing agent, PFA's forming component (A) may be selected from perfluoro(cyclo)alkanes, especially the C₃-C₈ perfluoro(cyclo)alkanes in which all hydrogen atoms in the (cyclo)alkane have been replaced by fluorine atoms, and partially fluorinated C₄ and higher (cyclo)alkanes in which the number of hydrogen atoms is not greater than half the number of carbon atoms in the fluoro(cyclo)alkane as represented by formula (I). Specific examples of partially fluorinated (cyclo)alkanes preferably include the fluorinated C₄-C₈ (cyclo)alkanes in which the number of hydrogen atoms is two or less for the C₄ (cyclo)alkanes and correspondingly four or less for the C₈ (cyclo)alkanes. These PFA's can be used singly or as a mixture of two or more PFA's. Perfluoropentane, perfluorohexane and perfluoroheptane are particularly preferred.

In the blowing agent, HCFC's forming component (B)(a) include those hydrogenated chlorofluorocarbons well known to those skilled in the art. In particular, one or more of the following can suitably be used:

| | |
|---|---|
| HCFC 123 which can be represented by | CF₃-CHCl₂ |
| HCFC 141b | CCl₂F-CH₃ |
| HCFC 124 | CHClF₂ |
| HCFC 142b | CH₃CClF₂ |
| FORMACEL S (Regd. Trade Mark) | CHClF₂ |
| HCFC 225ca | CHCl₂-CF₂-CF₃ |
| HCFC 225cb | CClF₂-CF₂-CHClF |

In the blowing agent the HFC's forming component (B)(b) include those hydrogenated fluorocarbons which have less than 4 carbon atoms. In particular, one or more of the following can be suitably used:

| | |
|---|---|
| HFC 125 which can be represented by | CHF₂-CF₃ |
| HFC 134a | CF₃CH₂F |
| HFC 152a | CH₃-CHF₂ |

Component (B)(c) is preferably a pentane, e.g. n-pentane or cyclopentane.

According to yet another embodiment, the present invention is a process for producing low-k phenolic foams having a k-value of below 0.025 W/m.K from phenolic resins using the blowing agents of the present invention.

The relative amounts of the Components (A) and (B) in the blowing agents used will depend upon the particular component (A) and Component (B) used, the type of resin to be foamed e.g. phenolic or polyurethane, the type of foam desired e.g. rigid foams made from these polymers are particularly valuable for thermal insulation, and the degree of foaming desired. In addition, it will also depend upon the nature of the surfactant used as cell stabiliser. As a general guide good foams, especially phenolic foams, can be obtained using as low as 0.5%w/w or as high as 70%w/w of the PFA in the blend but is preferably in the range from 5-60%w/w of the blend.

The surfactants or cell stabilisers that may be used in producing the foams of the present invention may be any of those conventionally used. For instance these may be silicones or ether alkoxylates, especially the alkoxylates of castor oil. Castor oil is a glyceride in which the glycerol is esterified predominantly with ricinoleic acid. The cell stabilizer is prepared from castor oil as such or from a hydrogenated derivative thereof. The hydrogenated derivative may be either fully or partially hydrogenated with respect to the unsaturation in the ricinoleic acid moiety in castor oil. Thus, castor oil or its hydrogenated derivative can be alkoxylated e.g. with ethylene oxide or mixtures thereof with propylene oxide and/or butylene oxide. The alkoxylated castor oil derivative contains suitably from 40-80 ethylene oxide units per mole of castor oil.

The hardener or curing agent may be any of the conventional harderners used for this purpose such as organic or inorganic acids including mineral acids such as sulphuric acid or hydrochloric acid, or, the aryl sulphonic acids such as p-toluene or xylene sulphonic acids and mixtures thereof. The hardener can be used as an aqueous solution containing e.g. from 50-75% w/w of the acid.

The process can be operated in the presence of adjuvants such as viscosity modifiers, lubricants and agents for modifying the boiling point of the blowing agent such as glycol, methanol and methylene chloride. These adjuvants may be added either to the resin or to the blowing agent in significant quantities e.g. upto 20% w/w. The presence of some of these adjuvants can also improve the efficiency of the blowing agent employed.

The procedure used for producing foams such as e.g. phenolic foams with these blowing agents is no different from those used with conventional blowing agents. This has the advantage that existing processes using agents which have a high CFC content can be readily adapted to using blends of the present invention. Typically, the methods described in our published patent specifications EP-A-154452, EP-A-170357, EP-A-223489, EP-A-348199, and in US-A-4883824 (Fibreglass Canada), US-A-4981879 (Jim Walter Research Corp) and GB-A-2125055 (Koppers) and in Kunststoff-Handbuch, Vol. VII, Polyurethane, published by Carl Hauser-Verlag, Munich, 1966, can be used and these methods are incorporated herein by way of reference.

The present invention is further illustrated with reference to the following Examples.

### 1. Resin Preparation

A phenolic resole was prepared in the conventional way. Aqueous formaldehyde (36.6%) (1.5 moles) was reacted with phenol (1 mole) using as a catalyst, aqueous sodium hydroxide (1ON) (2.7% by weight of phenol charged).

The reaction mixture was heated to 60°C over a 40 minute period and held at 60°C for 30 minutes. The temperature was carefully increased to 80°C and held for 30 minutes. The temperature was again increased to permit a 40 minute reflux period. Water was then vacuum distilled, monoethylene glycol (13%) added, to give a material with water content 9%. The resin was heated to 70°C and held to give a material with a viscosity of 1800 cPs at 25°C. This resin was used in all the Examples and Comparative Tests except Examples 16 and 17 and Comparative Test 8 below.

### 2. Laboratory foam preparation

The phenolic resole previously described was conditioned to 23-25°C. The cell stabilisers were added and dispersed. The blowing agent(s), pre-blended where more than one was used, were added and mechanically mixed to form an emulsion. The acid curing agent was then added to the emulsion, thoroughly mixed, and the mixture was poured into a paper mould, 22cm x 22cm x 10cm. The mould was transferred to an oven at 60°C for 1 hour to allow the foam to rise and cure. The foam was cut 24 hours after manufacture and tested.

### 3. Semi-scale foam preparation

Resin (containing cell stabilisers), blowing agent and acid curing agent were simultaneously fed to a mixing head. Dispensing was automatically stopped after approximately 1.6kgs of the resultant mixture had been deposited into a closed metal mould - 65cm x 65cm x 7.5cm - (lined with teflon-coated wooden inserts) which had been preheated for at least one hour in an oven at 60°C. The mould was returned to the oven for 1 hour and removed. The foam was de-moulded 24 hours later and cut for testing.

### 4. Thermal conductivity (k-value) measurements

Thermal conductivity values (k-values) were measured using an Anacon 88 instrument at an average temperature of 23.85°C - the hot plate temperature being 37.7°C and the cold plate temperature 10°C.

Samples were stored at 23-25°C and ca. 50% relative humidity, unless otherwise stated.

In the tabulated data below the following abbreviations have been used.
- Castor oil ethoxylate X =: 54 moles ethylene oxide per mole castor oil.
- Castor oil alkoxylate Y =: 50 moles ethylene oxide and 15 moles of propylene oxide per mole of castor oil.
- Castor oil ethoxylate Z =: 40 moles of ethylene oxide per mole of castor oil.
- Acid =: 50 % Sulphuric acid unless otherwise stated.
- CFC 11 =: trichlorofluoromethane
- CFC 113 =: trichlorotrifluoroethane.

### 5. Resin preparation for block foams

A phenolic resole was prepared in the conventional way. Aqueous formaldehyde (36.6%) (1.5 moles) was reacted with phenol (1 mole) using as a catalyst aqueous sodium hydroxide (1ON) (3.6% by weight of phenol charged).

The reaction mixture was heated to 60°C over a 40 minute period and held at 60°C for 30 minutes. The temperature was carefully increased to 80°C and held for 30 minutes. The temperature was again increased to permit a 40 minute reflux period. Water was then vacuumed distilled, to give a material with a water content of 19%. The resin was then heated to 70°C, and held to give a material of 3700-4400 cPs viscosity. Diethylene glycol (4%) was then added, to give a resin of 2500-3000 cPs at 25°C. This resin was used in Examples 16 and 17 and in Comparative Test 8.

### 6. Semi-scale block foam preparation

Resin (containing cell stabilisers), blowing agent and acid curing agent were simultaneously fed into a mixing head. Dispensing was automatically stopped when approximately 6kgs of the resulting mixture had been deposited into an open, teflon-lined, wooden mould - 50cm x 50cm x 50cm - which had been pre-heated for at least one hour in an oven at 60°C. The mould was returned to the oven for 24 hours, and removed. The foam was allowed to cool over 24 hours before being removed from the mould and cut for testing.

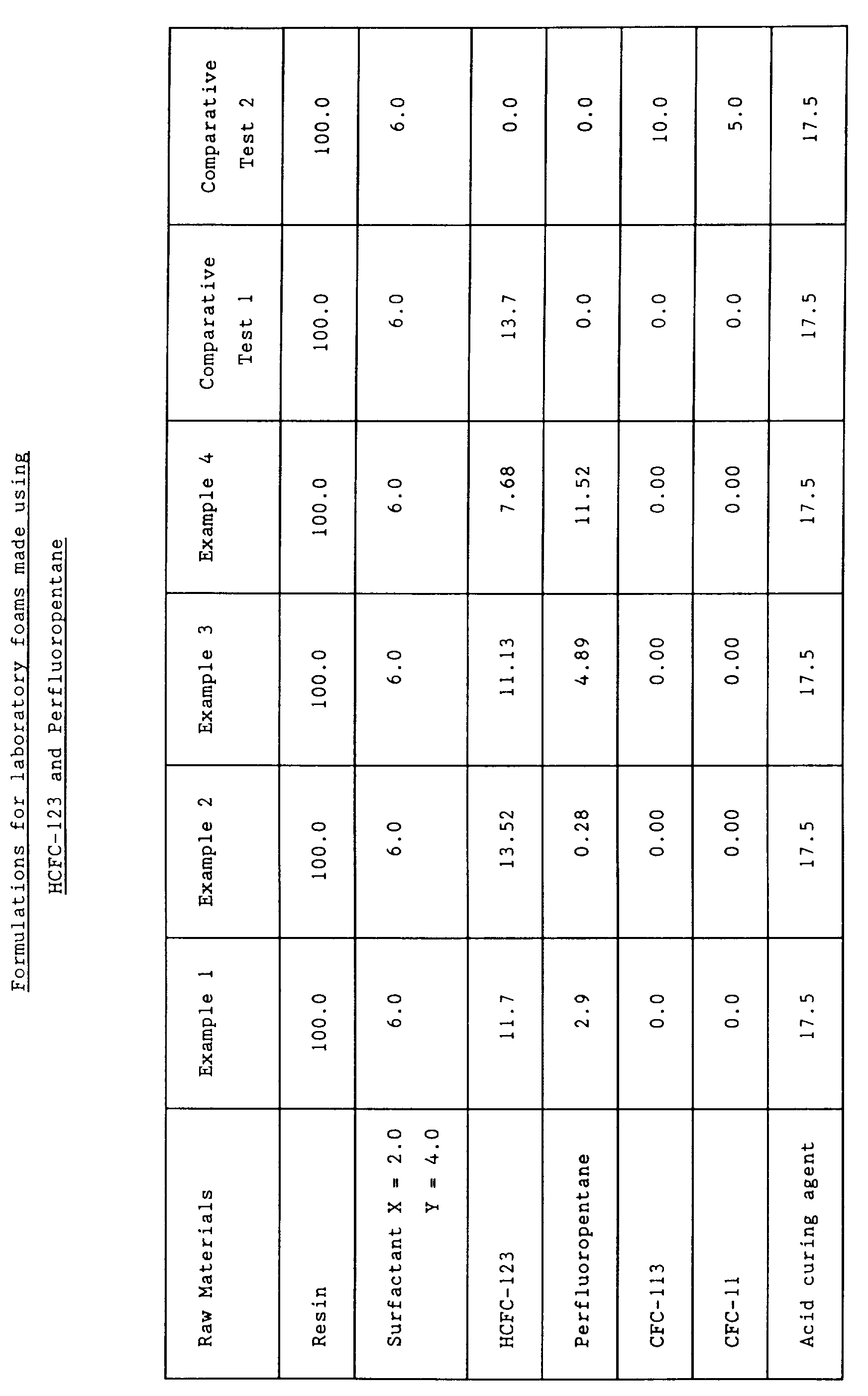

| Foam Ref. No. | Dry Density (kg/m³) | k-value (W/mK) |
|---|---|---|
| Example 1 | 50 | 0.0166 |
| Example 2 | 42 | 0.0200 |
| Example 3 | 50 | 0.0173 |
| Example 4 | 79 | 0.0188 |
| Comparative Test 1 | 39 | 0.0332 |
| Comparative Test 2 | 33 | 0.0278 |

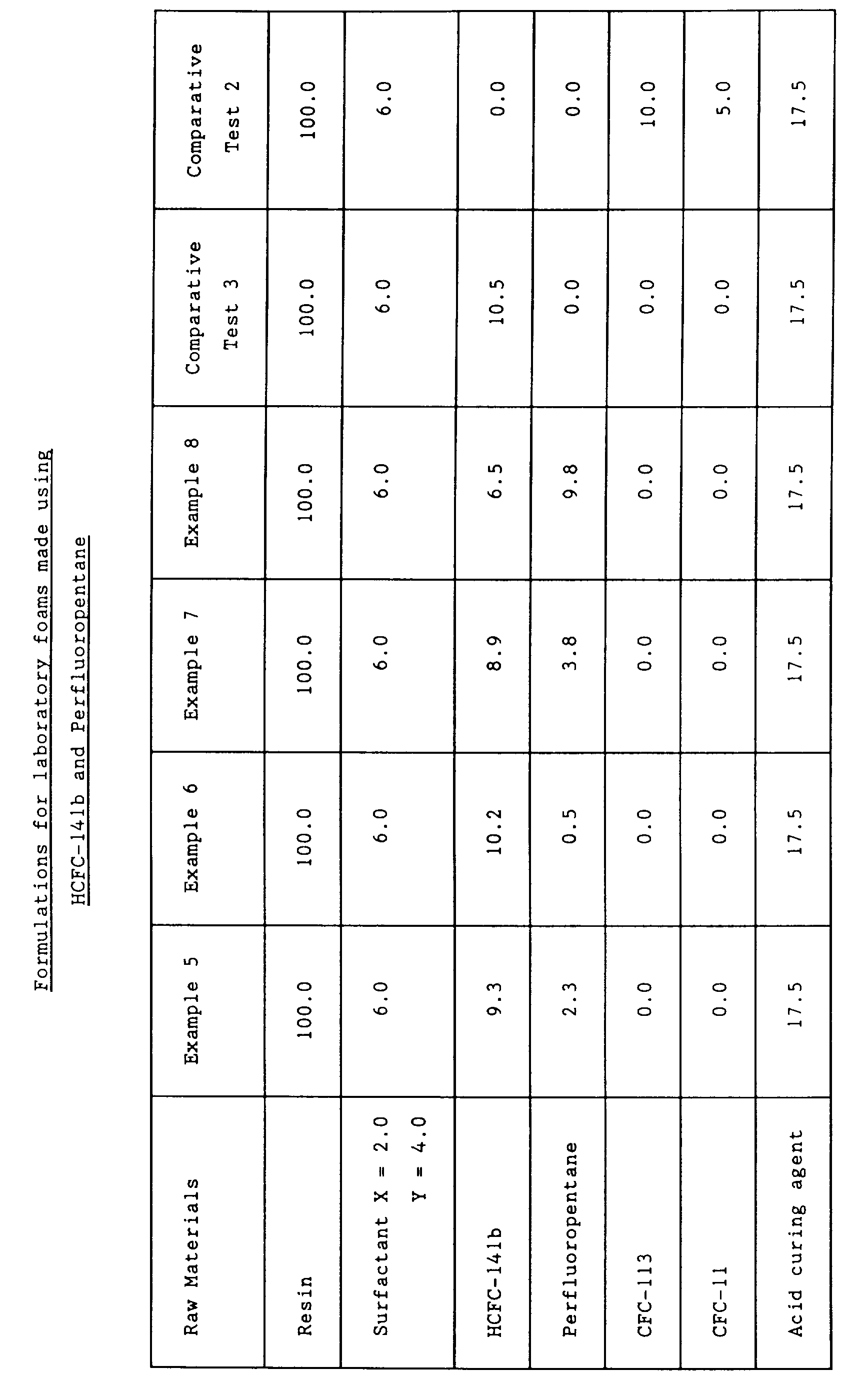

| Foam Ref. No. | Dry Density (kg/m³) | k-value (W/mK) |
|---|---|---|
| Example 5 | 50 | 0.0174 |
| Example 6 | 45 | 0.0191 |
| Example 7 | 51 | 0.0176 |
| Example 8 | 78 | 0.0197 |
| Comparative Test 3 | 39 | 0.0350 |
| Comparative Test 2 | 33 | 0.0278 |

| Formulations for laboratory foams mode using Pentane and Perfluoropentane | | |
|---|---|---|
| Raw Materials | Example 9 | Comparative Test 4 |
| Resin | 100.0 | 100.0 |
| Surfactant X = 4.0 Y = 8.0 | 12.0 | 12.0 |
| Pentane | 8.9 | 7.4 |
| Perfluoropentane | 2.2 | 0.0 |
| Acid curing agent | 17.5 | 17.5 |

| Foam Ref. No. | Dry Density (kg/m³) | k-value (W/mK) |
|---|---|---|
| Example 9 | 39 | 0.0186 |
| Comparative Test 4 | 45 | 0.0269 |

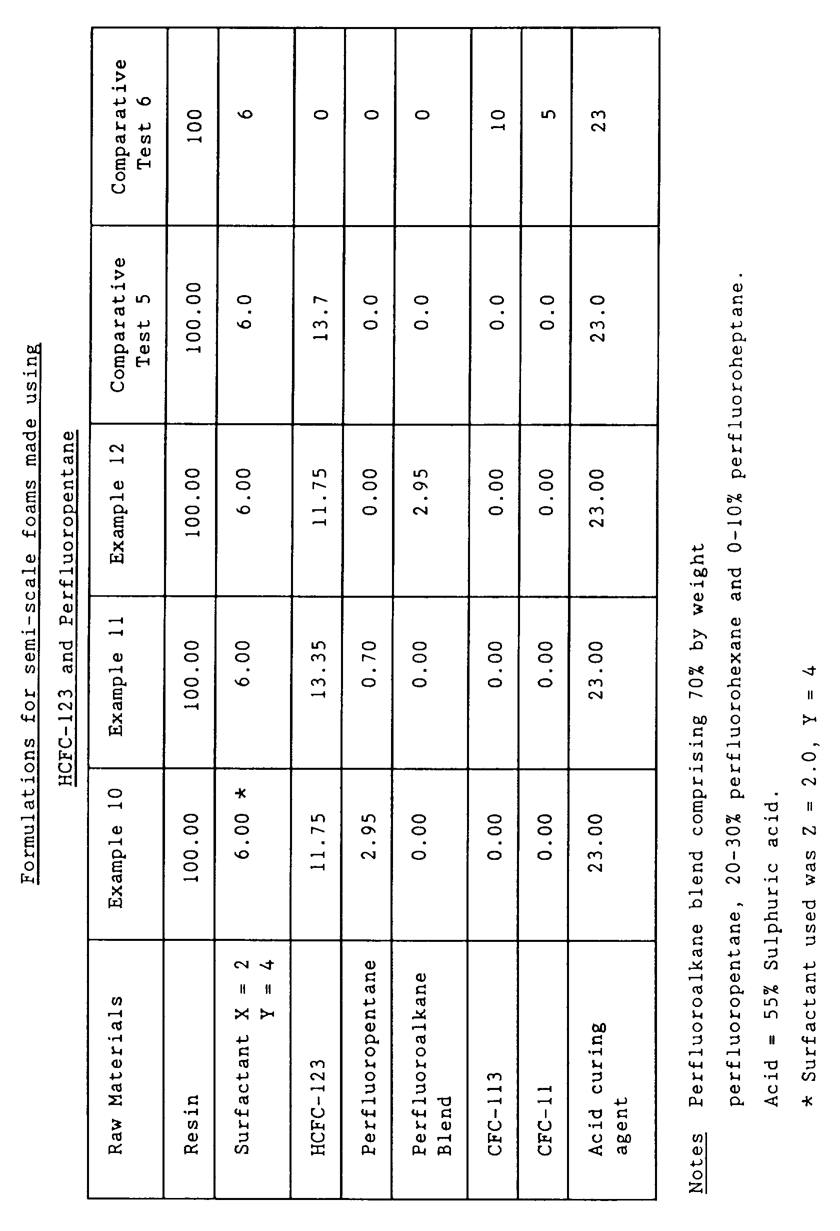

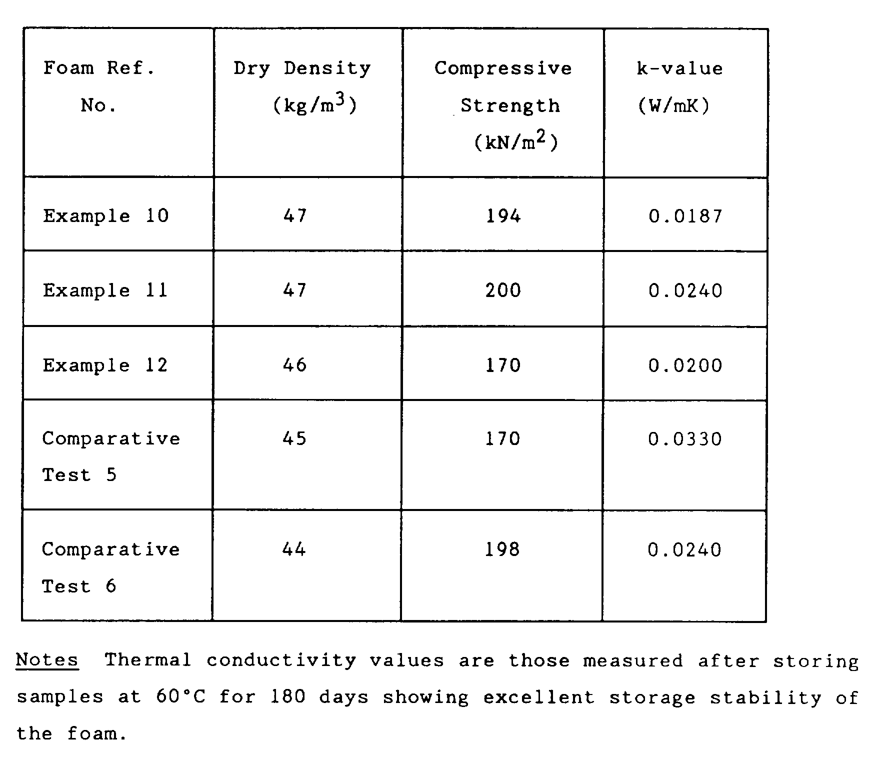

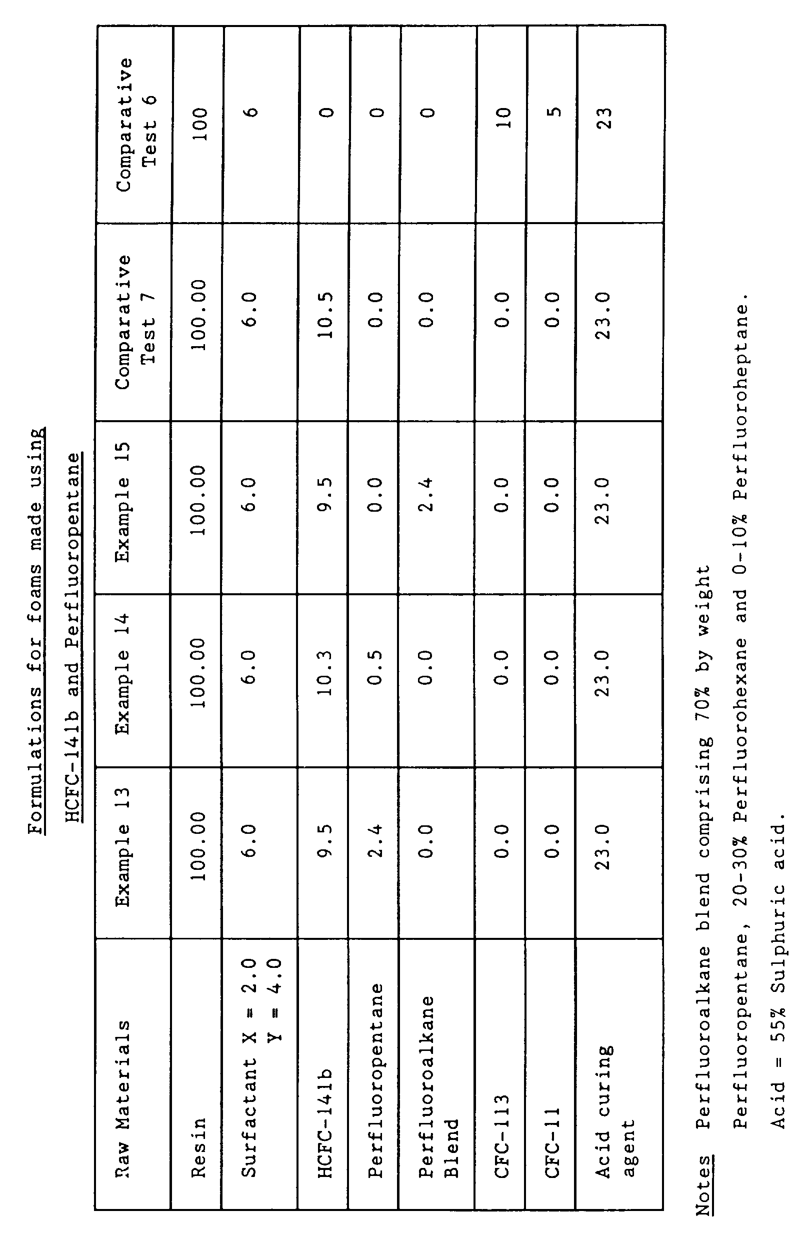

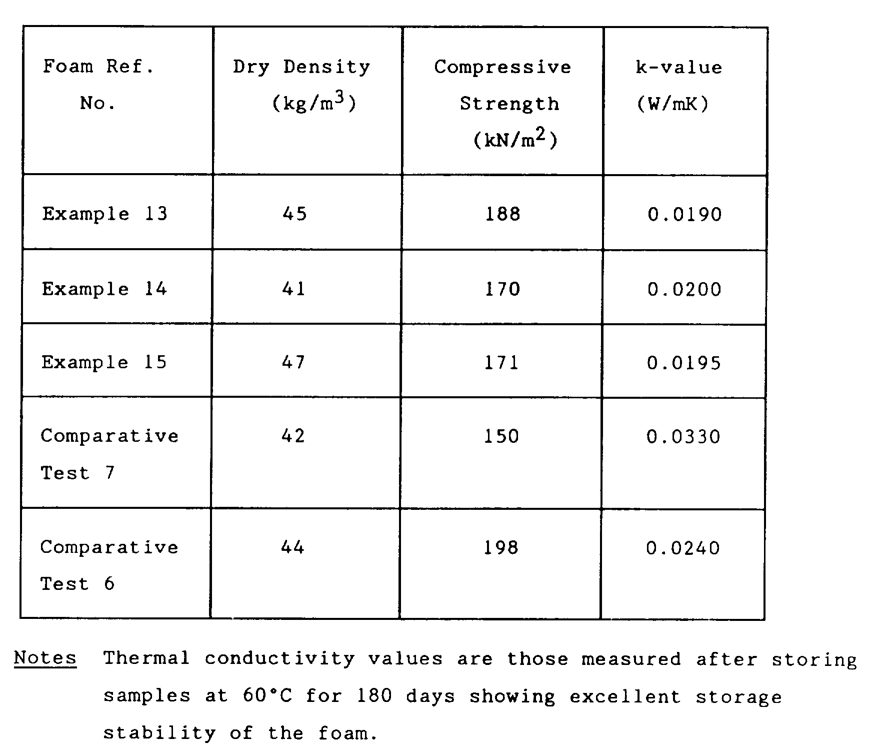

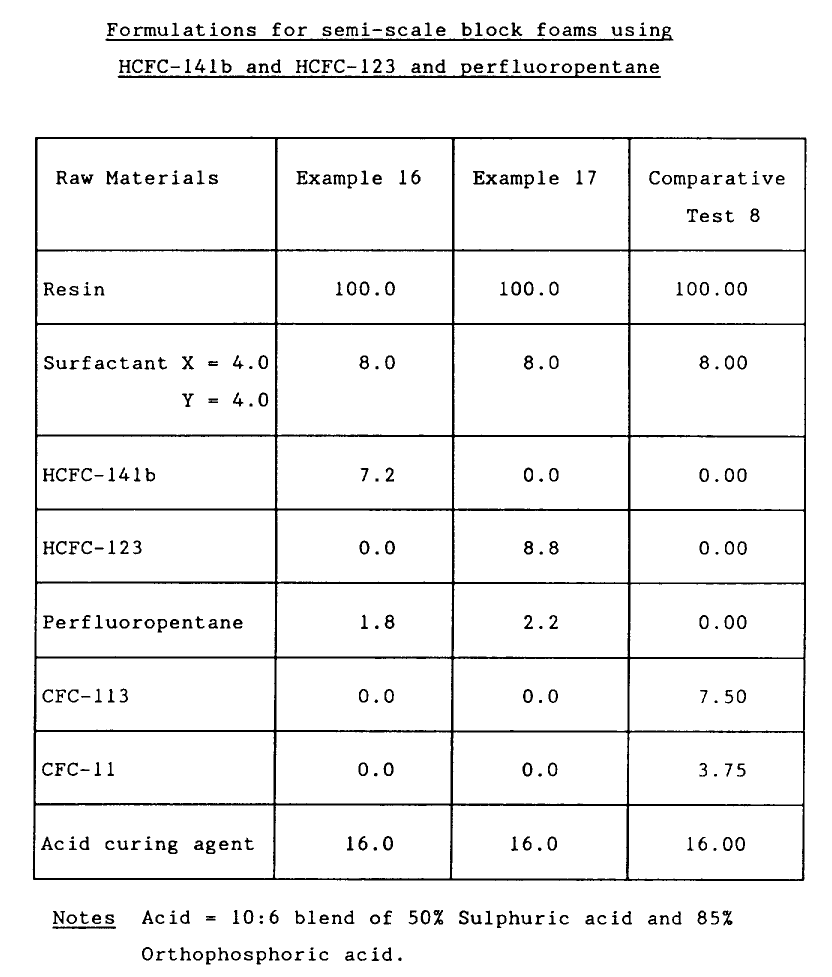

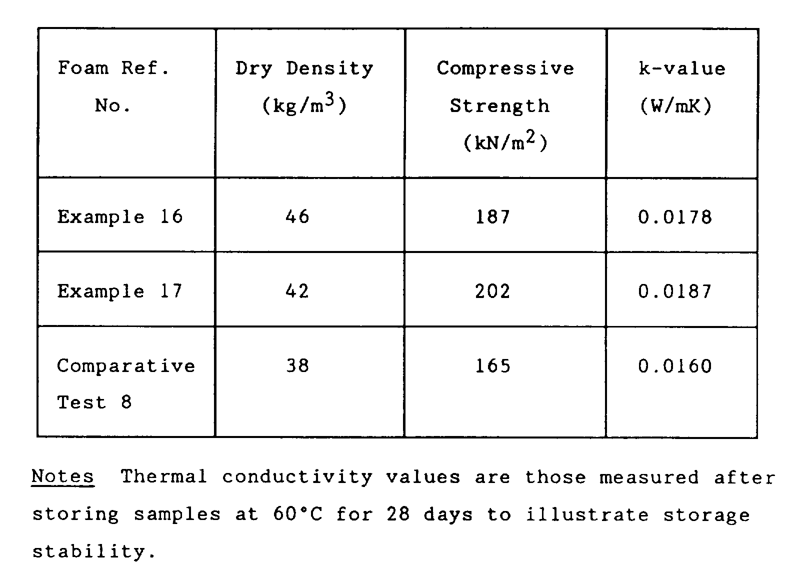

| Solubility of blowing agents in phenolic resin | | |
|---|---|---|
| Blowing Agent | Solubility at 20°C (wt %) | solubility in resin with surfactants at 20°C (wt %) |
| CFC-113 | 1.0 | |
| CFC-11 | 1.5 | |
| 2:1 CFC-113/CFC-11 | 1.2 | 3.1 |
| HCFC-141b | 3.9 | 7.6 |
| HCFC-123 | 2.8 | 8.0 |
| Perfluoropentane | not detected | |

## Claims

1. A process for producing phenolic foams from phenolic resins using a blowing agent, characterised by using as blowing agent a blend comprising:
(A) at least one fluorocarbon (hereafter "PFA") of the general formula:
CₙHₓF_{y} (I)
wherein
x= 0, or a whole number from 2 to n/2
such that
(a) for a cyclic fluorocarbon
when x = 0, n = 3 to 10 and y = 2n and
when x = a whole number from 2 to n/2,
n = 4 or higher and
y = 2n - x
whereby x+y = 2n, and
(b) for an open chain fluorocarbon
when x = 0, n = 2 to 10 and y = 2n+2 and
when x = a whole number from 2 to n/2,
n = 4 or higher and
y = (2n+2) - x, and
(B) at least one other component selected from
(a) a hydrogenated chlorofluorocarbon (hereafter "HCFC"),
(b) a hydrogenated fluorocarbon (hereafter "HFC") of the general formula:
CᵣHₚF_{q} (II)
wherein
r = 1 to 3
p = 1 to 4 and
q = (2r+2)-p for an open-chain HFC
and (2r-p) for a cyclic HFC, and
(c) an alkane or cycloalkane having a boiling point below 120°C.

2. A process as claimed in Claim 1, wherein the phenolic foams have a thermal conductivity value (k) below 0.025 W/m.k measured by the method disclosed in the description.

3. A process according to any one of the preceding Claims wherein the PFA's forming component (A) is selected from perfluoro(cyclo)alkanes in which all hydrogen atoms in the (cyclo)alkane have been replaced by fluorine atoms, and partially fluorinated C₄ and higher (cyclo)alkanes in which the number of hydrogen atoms is not greater than half the number of carbon atoms in the fluoro(cyclo)alkane as represented by formula (I).

4. A process according to any one of the preceding Claims wherein the partially fluorinated (cyclo)alkanes forming component (A) are fluorinated C₄-C₈ (cyclo)alkanes in which the number of hydrogen atoms is two or less for the C₄ (cyclo)alkanes and correspondingly four or less for the C₈ (cyclo)alkanes.

5. A process according to any one of the preceding Claims wherein the PFA forming component (A) is selected from perfluoropentane, perfluorohexane and perfluoroheptane.

6. A process according to any one of the preceding Claims wherein the HCFC's forming component (B)(a) is selected from one or more of the following:
CF₃-CHCl₂
CCl₂F-CH₃
CHClF₂
CH₃CClF₂
CHCl₂-CF₂-CF₃
CClF₂-CF₂-CHClF .

7. A process according to any one of the preceding Claims wherein the HFC's forming component (B)(b) is selected from, one or more of the following:
CHF₂-CF₃
CF₃-CH₂F
CH₃-CHF₂ .

8. A process according to any one of the preceding Claims wherein the component (B)(c) is a pentane.

## Patentansprüche

1. Verfahren zur Herstellung phenolischer Schaumstoffe aus Phenolharzen unter Verwendung eines Treibmittels, dadurch gekennzeichnet, daß als Treibmittel eine Mischung verwendet wird umfassend:
(A) mindestens einen Fluorkohlenstoff (im folgenden "PFA") der allgemeinen Formel:
CₙHₓF_{y} (I)
worin
x = 0 oder eine ganze Zahl von 2 bis n/2, so daß
(a) für einen cyclischen Fluorkohlenstoff
wenn x = 0, n = 3 bis 10 und y = 2n und
wenn x = eine ganze Zahl von 2 bis n/2,
n = 4 oder höher und
y = 2n-x
wobei x+y = 2n, und
(b) für einen offenkettigen Fluorkohlenstoff
wenn x = 0, n = 2 bis 10 und y = 2n+2 und
wenn x = eine ganze Zahl von 2 bis n/2,
n = 4 oder höher und
y = (2n+2)-x, und
(B) mindestens eine andere Komponente ausgewählt aus
(a) einem hydrierten Chlorfluorkohlenstoff (im folgenden "WCFK"),
(b) einem hydrierten Fluorkohlenstoff (im folgenden "WFK") der allgemeinen Formel:
CᵣHₚF_{q} (II)
worin
r = 1 bis 3
p = 1 bis 4 und
q = (2r+2)-p für einen offenkettigen WFK
und (2r-p) für einen cyclischen WFK, und
(c) einem Alkan oder Cycloalkan mit einem Siedepunkt unter 120°C.

2. Verfahren gemäß Anspruch 1, worin die phenolischen Schaumstoffe einen Wärmeleitfähigkeitswert (k) unter 0,025 W/m.k gemessen durch das in der Beschreibung offenbarte Verfahren haben.

3. Verfahren gemäß einem der vorhergehenden Ansprüche, worin die PFAs bildende Komponente (A) ausgewählt ist aus Perfluor(cyclo)alkanen, in denen alle Wasserstoffatome in dem (Cyclo)alkan durch Fluoratome ersetzt wurden, und teilweise fluorierten C₄- und höheren (Cyclo)alkanen, in denen die Anzahl der Wasserstoffatome nicht größer ist als die halbe Anzahl der Kohlenstoffatome in dem Fluor(cyclo)alkan wie durch Formel (I) dargestellt.

4. Verfahren gemäß einem der vorhergehenden Ansprüche, worin die teilweise fluorierten (Cyclo)alkane, die die Komponente (A) bilden, fluorierte C₄-C₈-(Cyclo)alkane sind, bei denen die Anzahl der Wasserstoffatome zwei oder weniger ist für die C₄-(Cyclo)alkane und entsprechend vier oder weniger für die C₈-(Cyclo)alkane.

5. Verfahren gemäß einem der vorhergehenden Ansprüche, worin die PFA bildende Komponente (A) ausgewählt ist aus Perfluorpentan, Perfluorhexan und Perfluorheptan.

6. Verfahren gemäß einem der vorhergehenden Ansprüche, worin die WCFKs bildende Komponente (B)(a) ausgewählt ist aus einer oder mehrerer der folgenden Verbindungen:
CF₃-CHCl₂
CCl₂F-CH₃
CHClF₂
CH₃CClF₂
CHCl₂-CF₂-CF₃
CClF₂-CF₂-CHClF.

7. Verfahren gemäß einem der vorhergehenden Ansprüche, worin die WFKs bildende Komponente (B)(b) ausgewählt ist aus einer oder mehrerer der folgenden Verbindungen:
CHF₂-CF₃
CF₃-CH₂F
CH₃-CHF₂.

8. Verfahren gemäß einem der vorhergehenden Ansprüche, worin die Komponente (B)(c) ein Pentan ist.

## Revendications

1. Procédé de production de mousses phénoliques à partir de résines phénoliques au moyen d'un agent porogène, caractérisé par l'utilisation, comme agent porogène, d'un mélange comprenant :
(A) au moins un fluorocarbone (désigné ci-après par "PFA") de formule générale :
CₙHₓF_{y} (I)
dans laquelle
x = 0 ou un nombre entier de 2 à n/2 de telle sorte que
(a) pour un fluorocarbone cyclique
lorsque x = 0, n = 3 à 10 et y = 2n, et
lorsque x = un nombre entier de 2 à n/2,
n = 4 ou plus de 4, et
y = 2n - x
la somme x + y étant ainsi égale à 2n, et
(b) pour un fluorocarbone à chaîne ouverte
lorsque x = 0, n = 2 à 10 et y = 2n+2, et
lorsque x = un nombre entier de 2 à n/2,
n = 4 ou plus de 4, et
y = (2n+2) - x, et
(B) au moins un autre constituant choisi entre
(a) un chlorofluorocarbone hydrogéné (désigné ci-après par "HCFC"),
(b) un fluorocarbone hydrogéné (désigné ci-après par "HFC") de formule générale :
CᵣHₚF_{q} (II)
dans laquelle
r= 1 à 3
p = 1 à 4, et
q = (2r+2)-p pour un HFC à chaîne ouverte, et (2r-p) pour un HFC cyclique, et
(c) un alcane ou cycloalcane ayant un point d'ébullition inférieur à 120°C.

2. Procédé suivant la revendication 1, dans lequel les mousses phénoliques ont une valeur de conductivité thermique (k) inférieure à 0,025 W/m.K, mesurée par le procédé mentionné dans la description.

3. Procédé suivant l'une quelconque des revendications précédentes, dans lequel le PFA servant de constituant (A) est choisi entre des perfluoro(cyclo)alcanes dans lesquels tous les atomes d'hydrogène dans le (cyclo)alcane ont été remplacés par des atomes de fluor, et des (cyclo)-alcanes partiellement fluorés ayant 4 ou plus de 4 atomes de carbone, dans lesquels le nombre d'atomes d'hydrogène est non supérieur à la moitié du nombre d'atomes de carbone dans le fluoro(cyclo)alcane représenté par la formule (I).

4. Procédé suivant l'une quelconque des revendications précédentes, dans lequel les (cyclo)alcanes partiellement fluorés servant de constituant (A) sont des (cyclo)-alcanes en C₄ à C₈ fluorés dans lesquels le nombre d'atomes d'hydrogène est égal ou inférieur à 2 pour les (cyclo)alcanes en C₄ et, proportionnellement, égal ou inférieur à 4 pour les (cyclo)alcanes en C₈.

5. Procédé suivant l'une quelconque des revendications précédentes, dans lequel le PFA servant de constituant (A) est choisi entre le perfluoropentane, le perfluorohexane et le perfluoroheptane.

6. Procédé suivant l'une quelconque des revendications précédentes, dans lequel le HCFC servant de constituant (B) (a) est choisi entre un ou plusieurs des suivants :
CF₃-CHCl₂
CCl₂F-CH₃
CHClF₂
CH₃CClF₂
CHCl₂-CF₂-CF₃
CClF₂-CF₂-CHClF.

7. Procédé suivant l'une quelconque des revendications précédentes, dans lequel le HFC servant de constituant (B) (b) est choisi entre un ou plusieurs des suivants :
CHF₂-CF₃
CF₃-CH₂F
CH₃-CHF₂.

8. Procédé suivant l'une quelconque des revendications précédentes, dans lequel le constituant (B) (c) est un pentane.
